# EUROPÄISCHE PATENTSCHRIFT

(11) **EP 3 205 556 B1**
(45) Veröffentlichungstag und Bekanntmachung des Hinweises auf die Patenterteilung: **15.09.2021**
(21) Anmeldenummer: 17155706.9
(22) Anmeldetag: 10.02.2017
(51) Int. Cl.: B62B 7/10, B62B 9/10, B62B 9/18, B62B 9/20, B62K 27/00

(54) **RAHMEN FÜR EINEN FAHRRADANHÄNGER ODER KINDERWAGEN**
FRAME FOR A BICYCLE TRAILER OR BUGGY
CADRE POUR UNE REMORQUE DE BICYCLETTES OU POUSSETTE

(30) Priorität: 12.02.2016 DE 102016102465
(43) Veröffentlichungstag der Anmeldung: 16.08.2017
(73) Patentinhaber: Boldt, Julia, 53773 Hennef (DE)
(72) Erfinder: Boldt, Nikolai, 53773 Hennef (DE)
(74) Vertreter: Freischem & Partner Patentanwälte mbB

(56) Entgegenhaltungen:
- EP-B1- 1 373 049
- CN-Y- 201 371 841
- DE-A1-102010 037 506
- US-A1- 2014 159 346

## Beschreibung

Die Erfindung betrifft einen Fahrradanhänger oder Kinderwagen mit einem Rahmen gemäß dem Oberbegriff des Anspruchs 1. Im Folgenden wird anstelle von Fahrradanhänger oder Kinderwagen auch der Begriff Fahrzeug verwendet.

Fahrradanhänger, insbesondere zur Beförderung von Personen, meist von Kindern, sind weit verbreitet und bekannt. Bei einigen aus der Praxis bekannten Fahrradanhängern lässt sich die Neigung der Rückenlehne für die zu befördernde Person ausgehend von einer Sitzposition in eine flachere Ruheposition verstellen, wobei eine Sitzfläche dazu nach vorne gerückt wird. Durch eine derartige Verstellmöglichkeit kann es zu einer eingeschränkten Beinfreiheit der beförderten Personen kommen, insbesondere wenn eine flache Position einer Rückenlehne eingestellt wird und die zu befördernde Person das Bedürfnis hat, ihre Beine auszustrecken, der Rahmen des Fahrradanhängers aber nur eine begrenzte Länge aufweist.

Aus EP 1 373 049 B1 ist ein Transportwagen für den Transport von Personen bekannt, insbesondere für den Transport von Kindern mit einem aus Verstrebungselementen gebildeten Wagenrahmen. Durch eine Verstelleinrichtung des Wagenrahmens lässt sich der Radstand zwischen einer vorderen Rolleinrichtung und hinteren Rolleinrichtungen einstellen. Mittels einer variablen Längenverstellung von einigen Verstrebungselementen kann die Höhe des Wagenrahmens variiert werden.

Aus CN 201 371 841 Y ist ein Kinderwagen bekannt, wobei der Kinderwagen zwei Seitenrahmen umfasst. Die Seitenrahmen sind derart verstellbar, dass sich der Radstand zwischen vorderen Rädern und hinteren Rädern verändern lässt. Ferner ist ein Sitz vorgesehen, wobei die Rückenlehne des Sitzes in ihrer Neigung verstellbar ist.

Aus US 2014/159346 A1 ist ein Kinderwagen mit einem Rahmen und einem Sitz bekannt. Der Rahmen weist einen Mechanismus auf, welcher eine Erweiterung des Rahmens nach hinten ermöglicht, um zusätzlichen Stauraum hinter dem Sitz zu schaffen.

Der Erfindung liegt die Aufgabe zugrunde, einen Fahrradanhänger oder Kinderwagen mit einem Rahmen zur Verfügung zu stellen, mittels welchem der Fahrkomfort und/oder die Sicherheit der zu befördernden Personen weiter erhöht werden kann.

Die Lösung der Aufgabe erfolgt erfindungsgemäß mit den Merkmalen des Anspruchs 1. Weitere Vorteile der Erfindung sind in Verbindung mit den abhängigen Ansprüchen beschrieben.

Ein erfindungsgemäßer Fahrradanhänger oder Kinderwagen umfasst
(a) mindestens ein sich in Fahrzeuglängsrichtung und in Fahrzeughochrichtung erstreckendes linkes Seitenrahmenelement zur Bildung eines linken geschlossenen Seitenrahmens,
(b) mindestens ein sich in Fahrzeuglängsrichtung und in Fahrzeughochrichtung erstreckendes rechtes Seitenrahmenelement zur Bildung eines rechten geschlossenen Seitenrahmens und
(c) mindestens ein sich in Fahrzeugquerrichtung zwischen dem linken Seitenrahmen und dem rechten Seitenrahmen erstreckendes Verbindungselement, wobei
(d) der linke Seitenrahmen und der rechte Seitenrahmen jeweils derart veränderlich ausgebildet sind, dass diese in mindestens zwei für die bestimmungsgemäße Verwendung des Fahrradanhängers oder Kinderwagens geeignete, unterschiedliche Seitenrahmenkonfigurationen verstellbar und in diesen Seitenrahmenkonfigurationen fixierbar sind,
(e) wobei eine Rückenlehne eines Sitzes zusätzlich zu mindestens einer Sitzposition in eine Ruheposition mit einer im Vergleich zur Sitzposition geringeren Neigung der Rückenlehne bringbar ist, in welcher die Rückenlehne in Fahrzeuglängsrichtung betrachtet mit einem Nutz-Teilbereich, der sich über einen überwiegenden Teil der Länge der Rückenlehne erstreckt, vor dem rückseitigen Ende mindestens eines Seitenrahmens angeordnet ist, insbesondere mit einem unteren Nutz-Teilbereich, d.h. mit einem sich von einer Sitzfläche aus nach oben erstreckenden Nutz-Teilbereich.
(f) Die Rückenlehne und die Seitenrahmen sind über Kopplungsmittel derart funktional miteinander verbunden, dass eine Veränderung der Neigung der Rückenlehne gleichzeitig eine Veränderung der Seitenrahmenkonfiguration bewirkt.

Mit einem überwiegenden Teil der Länge ist gemeint, dass mehr als 50 Prozent der Länge der Rückenlehne in der Ruheposition vor dem rückseitigen Ende des Seitenrahmens bzw. beider Seitenrahmen angeordnet ist, insbesondere ein sich von einer Sitzfläche über mindestens 50 Prozent nach oben erstreckender Längenteil der Rückenlehne. Bevorzugt sind 80 Prozent, 90 Prozent oder 100 Prozent der Länge der Rückenlehne vor dem rückseitigen Ende des Seitenrahmens angeordnet.

Vorzugsweise ist der Nutz-Teilbereich in der Sitzposition und in der Ruheposition der Rückenlehne vor den rückseitigen Enden beider Seitenrahmen angeordnet.

Mit "sich in Fahrzeughochrichtung (z-Richtung) und in Fahrzeuglängsrichtung (x-Richtung) erstreckend" ist gemeint, dass dies die Hauptorientierungsrichtungen des Seitenrahmens in Bezug auf die Fahrtrichtung (Fahrzeuglängsrichtung) des Fahrzeugs sind. Mit anderen Worten ausgedrückt, handelt es sich bei den Seitenrahmen um Elemente, welche sich nicht oder (im Vergleich zu ihrer Erstreckung in Fahrzeuglängsrichtung und/oder in Fahrzeughochrichtung) nur geringfügig in Fahrzeugquerrichtung (y-Richtung) erstrecken. Die Fahrzeughochrichtung entspricht der Richtung der Erdanziehungskraft.

Bei den Seitenrahmen handelt es sich um Elemente, die üblicherweise seitlich neben einer zu transportierenden Person angeordnet sind und äußere seitliche Begrenzungen eines Transportraumes darstellen. Als Verbindungselemente zwischen den Seitenrahmen kommen insbesondere ein oder mehrere Sitze, eine Sitzbank und/oder Querstreben in Form von fest mit den Seitenrahmen verbundenen Profilen in Betracht. Es ist bevorzugt, wenn mindestens ein Verbindungselement in einer vorderen Hälfte des Seitenrahmens fest mit den Seitenrahmen verbunden ist und ein weiteres Verbindungselement in einer hinteren Hälfte des Seitenrahmens fest mit den Seitenrahmen verbunden ist, weil sich dann eine hohe Gesamtsteifigkeit des aus den Seitenrahmen und den Verbindungselementen gebildeten Rahmens ergibt. Alternativ kann sich ein Verbindungselement von einer vorderen Hälfte des Seitenrahmens bis in eine hintere Hälfte des Seitenrahmens erstrecken. Besondere ergonomische Vorteile oder eine verbesserte Sicherheit eines Rahmens ergeben sich durch die Verstellbarkeit der Seitenrahmenkonfigurationen. Damit ist gemeint, dass die Seitenrahmen in ihrer Größe und/oder in ihrer Form zwischen mindestens zwei unterschiedlichen Seitenrahmenkonfigurationen verstellbar sind und in diesen Seitenrahmenkonfigurationen fixiert werden können. Dies ermöglicht es, die Größe und/oder Form des Fahrzeugs an einen bestimmten Transportzustand anzupassen. Beispielsweise kann ein Rahmen eines Fahrzeugs, das gerade für den Transport eines sich ausruhenden Kindes benutzt werden soll, in eine flache Seitenrahmenkonfiguration gebracht werden, ohne die Beinfreiheit für das Kind einzuschränken. In diesem Fall können die Seitenrahmen in eine Konfiguration mit geringerer Höhe und größerer Länge gebracht werden. Dadurch wird auch der Luftwiderstandsbeiwert des Fahrzeugs reduziert. Ferner kann durch die Konfiguration mit geringerer Höhe der Schwerpunkt des Fahrzeugs abgesenkt werden, wodurch sich die Kippstabilität des Fahrzeuges erhöht. Die Sicherheit des Fahrzeuges, insbesondere gegen ein seitliches Umkippen wird dabei sowohl im regulären Fahrbetrieb als auch bei Einwirkung von Seitenaufprallkräften (z.B. bei Unfällen) erhöht. Ist die Ruhephase des Kindes abgeschlossen und/oder möchte dieses möglichst aufrecht sitzen, können die Seitenrahmen in eine Konfiguration mit größerer Höhe (und ggf. reduzierter Länge) gebracht werden.

Zusätzlich wird auch in einer Ruheposition der Rückenlehne die Sicherheit des Kindes gewährleistet, indem ein - insbesondere unterer - Nutz-Teilbereich der Rückenlehne in Fahrzeuglängsrichtung betrachtet zumindest von hinten durch das rückseitige Ende des Seitenrahmens Seitenrahmenelement geschützt ist. Das rückseitige Ende kann insbesondere durch ein Seitenrahmenelement oder durch eine Gelenkverbindung zwischen zwei Seitenrahmenelementen gebildet sein.

Ein Nutz-Teilbereich oder ein unterer Nutz-Teilbereich kann, insbesondere wenn die Nutzung eines Kinderwagens oder Fahrradanhängers an bestimmte Körpermaße gekoppelt ist, z.B. an die Körpergröße oder an die maximale Höhe des Kopfes im Sitzen, auch durch absolute Werte festgelegt sein. Für Kinderwagen oder Kinder-Fahrradanhänger sind bevorzugte Längen von unteren Nutz-Teilbereichen - gemessen von der Sitzfläche aus - von mindestens 50 cm, bevorzugt 60 cm und besonders bevorzugt mindestens 70 cm der Rückenlehne, so dass diese jeweilige Länge der Rückenlehne in der Ruheposition vor dem rückseitigen Ende mindestens eines Seitenrahmens angeordnet ist. Bevorzugt ist es, wenn die gesamte Rückenlehne - auch in der Ruheposition - vor dem rückseitigen Ende beider Seitenrahmen angeordnet ist.

Etwaige von hinten auf den Rahmen einwirkende Kräfte, die beispielsweise bei Unfällen auf einen Kinderwagen oder Fahrradanhänger einwirken können, werden in diesem Fall, insbesondere dann, wenn sie - wie in der Praxis häufig - im unteren Bereich von bis zu ca. 50 cm, 60 cm oder 70 cm - gemessen vom Boden - auf den Fahrradanhänger auftreffen, in den bzw. die Seitenrahmen (und nicht direkt in die Rückenlehne) eingeleitet.

Als Ruheposition werden im Rahmen dieser Offenbarung insbesondere Positionen der Rückenlehne angesehen, in welchen der Winkel der Rückenlehne gegenüber einer sich in Fahrtrichtung erstreckenden Horizontalen, von dem Schnittpunkt mit der Sitzfläche aus gemessen, insbesondere mindestens 120°, bevorzugt mindestens 130° und besonders bevorzugt mindestens 140° beträgt.

Das Vorstehende gilt sinngemäß auch für Fahrradhänger, die für den Transport von Waren eingesetzt werden. Durch die Verstellbarkeit der Seitenrahmen kann die Größe und/oder Form eines Fahrradanhängers vorteilhaft an zu transportierende Waren angepasst werden, insbesondere um die Transportkapazität zu erhöhen und/oder zu transportierende Waren effizient vor der Einwirkung äußerer Kräfte zu schützen.

Es wird darauf hingewiesen, dass die Form der Seitenrahmen in verschiedenen Seitenrahmenkonfigurationen auch unverändert bleiben kann, wenn eine Verstellmöglichkeit vorgesehen ist, die eine kongruente Flächenveränderung ermöglicht, indem während einer Veränderung der Länge und der Höhe der Seitenrahmen das Längen-/Höhenverhältnis erhalten bleibt.

Mit der Bezeichnung "bestimmungsgemäße Verwendung" ist vorliegend gemeint, dass das Fahrzeug als Transportmittel für Personen oder Waren verwendet wird. Nicht als "bestimmungsgemäße Verwendung" angesehen werden soll hingegen ein Zusammenklappen des Fahrzeugs zum Transport oder zum platzsparenden Verstauen des Fahrzeugs selbst.

Nichtsdestotrotz bezieht sich die Erfindung auch - und vorzugsweise - auf Fahrzeuge, welche zum Transport und zum Verstauen der Fahrzeuge zusammengeklappt und somit zusätzlich in eine Transport- bzw. Lagerungskonfiguration gebracht werden können, beispielsweise um das Fahrzeug in einem Kofferraum eines Kraftfahrzeugs transportieren zu können.

Die Seitenrahmen sind in einer praktischen Ausführungsform so ausgelegt, dass eine in dem Fahrzeug zu befördernde Person in jeder Seitenrahmenkonfiguration in einer Seitenansicht vollständig von dem Rahmen umschlossen ist, d.h. die Seitenrahmen eine größere Höhe und eine größere Länge aufweisen als die Person, so dass die Person von den Seitenrahmen sicher umschlossen ist.

Wenn der Sitz zur Beförderung einer Person derart innerhalb des Seitenrahmens angeordnet ist, dass die Seitenrahmen eine in dem Fahrzeug sitzende Person in Fahrzeughochrichtung betrachtet überragen, ist die Person, und insbesondere der Kopf der Person, besonders gut von der Oberseite her geschützt. Der Seitenrahmen kann dazu zwischen einer ersten Seitenrahmenkonfiguration mit einer größeren Höhe H₁ für eine aufrechte Sitzposition und mindestens einer zweiten Seitenrahmenkonfiguration mit einer geringeren Höhe H₂ für eine flache Sitzposition verstellbar sein. Verschiedene Neigungen einer Rückenlehne eines Sitzes oder einer Sitzbank können auch mit verschiedenen Seitenrahmenkonfigurationen gekoppelt sein. Dies kann beispielsweise zwangsweise dadurch erfolgen, dass die Veränderung eines Parameters (z.B. der Neigung) aufgrund einer Zwangskopplung mittels eines Kopplungsmechanismus automatisch die Veränderung des anderen Parameters zur Folge hat. Oder es können Sicherheitsmechanismen vorgesehen sein, die das Verstellen eines Parameters nur dann ermöglichen, wenn zuvor der andere Parameter in eine Sollkonfiguration gebracht wurde. Beispielsweise kann die Rückenlehne eines Fahrzeugs an einem Verbindungselement abgestützt sein, so dass nur durch Veränderung der Seitenrahmenkonfiguration die Position des entsprechenden Verbindungselements veränderbar ist. Die veränderte Position des Verbindungselements ermöglicht es dann, die Rückenlehne in eine flache Konfiguration zu bringen.

Unter der Höhe H wird vorliegend die Höhe in Fahrzeughochrichtung von einer Sitzflächenebene eines Sitzes oder einer Sitzbank aus bis zum höchsten Punkt der Seitenrahmen verstanden. Es ist bevorzugt, wenn sich der jeweils höchste Punkt durch Verstellung der Seitenrahmenkonfiguration derart verstellen lässt, dass diese mit der jeweiligen Position des Kopfes einer zu befördernden Person zusammenfällt.

Nur der Vollständigkeit halber wird noch einmal betont, dass ein nicht erfindungsgemäßer Rahmen auch derart ausgebildet sein kann, dass die Seitenrahmenkonfiguration unabhängig von der Sitzposition oder von sonstigen Parametern verstellbar ausgebildet sein kann.

Die Rückenlehne und die Seitenrahmen sind über Kopplungsmittel funktional miteinander verbunden. Mit einer funktionalen Kopplung kann eine Bewegung bzw. Neigung der Rückenlehne gleichzeitig eine Veränderung der Seitenrahmen bewirken. Insbesondere kann damit eine durch die Neigung oder Verschiebung der Rückenlehne verursachte Einschränkung der Beinfreiheit und/oder Verringerung des Abstandes zwischen dem Kopf einer Person und den Seitenrahmen, insbesondere im oberen Bereich, entgegengewirkt werden, indem die Seitenrahmen beispielsweise in eine andere Seitenrahmenkonfiguration gebracht werden. Mittels einer funktionalen Kopplung kann zudem die Handhabung des Rahmens erleichtert werden, da nur eine Tätigkeit durchgeführt werden muss, um die Rückenlehne und den Seitenrahmen in ihrer Konfiguration zu verstellen. Mittels einer funktionalen Kopplung kann auch sichergestellt werden, dass von Nutzern eines Rahmens bzw. eines Fahrradanhängers oder Kinderwagens mit einem solchen Rahmen stets eine sinnvolle Kombination aus Rückenlehnenposition und Rahmenkonfiguration gewählt wird. Fehlbedienungen bzw. Fehleinstellungen werden somit sicher vermieden.

Wie bereits erwähnt, kann die Rücklehne des Sitzes an einem Seitenrahmenelement oder an einem sich zwischen zwei Seitenrahmenelementen erstreckenden Verbindungselement unmittelbar oder mittelbar abstützend angeordnet sein. Eine solche Anordnung hat den Vorteil, dass die Seitenrahmenkonfiguration auf einfache Art und Weise mit einer Sitzposition koppelbar ist, wobei die Kopplung zwangsgeführt sein kann, wenn die Rückenlehne mit dem Verbindungselement oder dem Seitenrahmenelement verbunden (und nicht von diesem lösbar) ist. In diesem Fall kann durch eine Verstellung der Seitenrahmenkonfiguration auch eine Veränderung der Neigung einer Rückenlehne bewirkt werden. Die Abstützung der Rückenlehne kann aber auch über ein bewegliches und lageveränderliches Abstützelement erfolgen, um unabhängig von der Seitenrahmenkonfiguration - zumindest innerhalb vorgegebener Grenzen - die Neigung der Rückenlehne noch verstellen zu können. Ein derartiges Abstützelement kann beispielsweise klauenförmig derart ausgebildet sein, dass es das Verbindungselement zumindest teilweise umgreift und an dieses angesteckt werden kann. Eine derart funktional mit einem Verbindungselement gekoppelte Rückenlehne lässt sich schnell und einfach montieren, demontieren und verstellen.

Für eine einfachere und verbesserte Verstellbarkeit weist die Rückenlehne des Sitzes insbesondere ein erstes Führungselement auf und mindestens ein Seitenrahmenelement und/oder ein Verbindungselement weist ein zu dem ersten Führungselement korrespondierendes zweites Führungselement auf. Dabei sind das erste Führungselement und das zweite Führungselement nach Art einer Gleitschienenführung miteinander zwangsgekoppelt. Mittels einer derartigen Gleitschienenführung lässt sich auf konstruktiv einfache und zugleich funktional sichere Art und Weise eine Kopplung zwischen der Verstellung der Rückenlehne und der Verstellung der Seitenrahmenkonfiguration erzielen. Wenn zwei Gleitschienenführungen rechts und links eines jeweiligen Seitenrahmens vorgesehen und diese über mindestens ein Verbindungselement gekoppelt sind, kann zusätzlich die Gesamtsteifigkeit des Rahmens erhöht werden.

Als erstes Führungselement und als zweites Führungselement können insbesondere eine Gleitschiene mit einem Schlitz und ein Gleitkörper mit einem in den Schlitz eingreifenden oder den Schlitz hintergreifenden Element eingesetzt werden. Insbesondere kann das eingreifende Element als Bolzen ausgebildet sein. Diese Konstruktion kann einfach und kostengünstig realisiert werden und ist darüber hinaus robust und weitestgehend wartungsfrei sowie witterungsbeständig.

Es wird darauf hingewiesen, dass die Anordnung des ersten Führungselements und des zweiten Führungselements wie vorstehend beschrieben und im Detail noch in der Figurenbeschreibung erläutert erfolgen kann und alternativ auch in genau umgekehrter Weise. Es ist dementsprechend irrelevant, ob das erste Führungselement oder das zweite Führungselement an der Rückenlehne angeordnet ist.

In einer weiteren praktischen Ausführungsform umfasst jeder Seitenrahmen mindestens zwei Seitenrahmenelemente. Dabei umfasst ferner jeder Seitenrahmen mindestens eine Gelenkverbindung zwischen zwei Seitenrahmenelementen, über welche die Seitenrahmenelemente relativbeweglich zueinander angeordnet sind. Weiter bevorzugt weisen die Seitenrahmenelemente drei und besonders bevorzugt vier oder mehr Seitenrahmenelemente auf. Es können auch mehrere Gelenkverbindungen zwischen benachbarten Seitenrahmenelementen vorgesehen sein. So können die Seitenrahmen auf einfache Art und Weise größen- und/oder formveränderlich ausgebildet werden. Mit Hilfe der Gelenkverbindungen lassen sich benachbarte Seitenrahmenelemente zueinander verschwenken, so dass sich der zwischen diesen Elementen gebildete Winkel verändert. Um die Länge und die Höhe der Seitenrahmen anzupassen, bietet es sich an, mindestens eine erste Gelenkverbindung in einer vorderen Hälfte des Seitenrahmens und mindestens eine weitere Gelenkverbindung in einer hinteren Hälfte des Seitenrahmens vorzusehen. Alternativ oder in Ergänzung dazu können auch eine erste Gelenkverbindung in einer oberen Hälfte des Seitenrahmens und eine weitere Gelenkverbindung in einer unteren Hälfte des Seitenrahmens vorgesehen sein.

Mindestens eine Gelenkverbindung an dem Rahmen kann in einer weiteren praktischen Ausführungsform als ein Drehgelenk ausgebildet sein. Drehgelenke sind als Standardbauteile kostengünstig und wartungsarm. Ferner kann mit Drehgelenken eine hohe Steifigkeit gegenüber Kräften senkrecht zur Drehachse erhalten werden, insbesondere gegenüber auf den Rahmen einwirkenden Biege- und Torsionskräften. Über ein Drehgelenk verbundene Seitenrahmenelemente können nur entlang eines Freiheitsgrades - um die Drehachse - zueinander bewegt werden. Vorzugsweise sind an dem Rahmen mehr als die Hälfte oder sogar alle Gelenkverbindungen als Drehgelenke ausgebildet.

Für eine alternative oder zusätzliche einfache Möglichkeit zur Verstellung der Seitenrahmenkonfiguration umfasst jeder Seitenrahmen vorzugsweise mindestens zwei Seitenrahmelemente, welche über eine Schiebeverbindung relativ zueinander verschiebbar sind. Bei einer Schiebeverbindung können die mindestens zwei Seitenrahmenelemente relativ zueinander verschoben werden, so dass die Summe der wirksamen Länge der beiden zueinander verschiebbaren Seitenrahmenelemente veränderbar ist. Dazu kann insbesondere ein Seitenrahmenelement hohl ausgebildet sein und einen größeren Innendurchmesser aufweisen als ein zweites Seitenrahmenelement, so dass das zweite Seitenrahmenelement in das erste Seitenrahmenelement eingeschoben und teleskopartig verstellt werden kann. Schiebeverbindungen können beliebig mit Gelenkverbindungen kombiniert werden.

Ein Schiebeelement kann auch dadurch realisiert werden, dass zwei Seitenrahmenelemente auf einem als Verbindung dienenden Mittelstück mit einem kleineren Außenmaß verschiebbar derart gelagert sind, dass die auf dem Mittelstück schiebebeweglich gelagerten Seitenrahmenelemente zwischen einer Maximallänge und einer Minimallänge verstellbar sind.

Unabhängig davon, ob Schiebeverbindungen oder Gelenkverbindungen vorgesehen sind, können zur Fixierung der Seitenrahmen in den mindestens zwei Seitenrahmenkonfigurationen Rastelemente mit vorgegebenen Rastpositionen vorgesehen sein. Mit derartigen Rastelementen können Soll-Längen von zwei mittels Schiebeverbindung verbundenen Seitenrahmenelementen und/oder Soll-Winkel zwischen zwei mittels Gelenkverbindung verbundenen Seitenrahmenelementen in bestimmten Seitenrahmenkonfigurationen vorgegeben werden. Als Rastelement können dazu an dem Außendurchmesser des inneren Seitenrahmenelements federelastische Elemente angeordnet oder ausgebildet sein, welche die zwei Seitenrahmenelemente in Soll-Positionen zueinander fixieren. Nur beispielhaft wird diesbezüglich auf Bolzenverbindungen (insbesondere druckfederbelastet) und Mehrkantgeometrien hingewiesen. Beispielsweise kann ein Seitenrahmenelement fest mit einem Sechskantprofil verbunden sein, das in einer SollPosition in eine korrespondierende Sechskantöffnung eingreift. Zum gelenkigen Verstellen kann dann das Sechskantprofil aus der Öffnung entfernt, der Winkel zwischen den Seitenrahmenelementen verändert und der Eingriff des Sechskantprofils in die Öffnung in einer anderen Winkelanordnung wiederhergestellt werden, um die neue Seitenrahmenkonfiguration zu fixieren. Anstelle von Sechskantprofilen können auch andere geeignete Geometrien verwendet werden. Ferner kann auch an jedem Seitenrahmen ein separates Rastelement vorgesehen sein.

Es ist bevorzugt, wenn jede Schiebeverbindung und/oder jede Gelenkverbindung mindestens zwei Soll-Rastpositionen aufweist, damit der Rahmen in den mindestens zwei Seitenrahmenkonfigurationen fixiert werden kann. Weiter bevorzugt ist es, wenn jede Schiebeverbindung und/oder jede Gelenkverbindung 3-5, 3-7, 3-10 oder mehr Rastpositionen aufweist, um eine größere Zahl von Seitenrahmenkonfigurationen einstellen und fixieren zu können.

Eine Gelenkverbindung und/oder Schiebeverbindung kann in einer weiteren praktischen Ausführungsform auch gleichzeitig als Verbindung zwischen einem (oder zwei) Seitenrahmen und einem Schiebegriff ausgebildet sein. Unter einem Schiebegriff wird vorliegend ein Griff oder ein Bügel verstanden, der insbesondere an der Rückseite des Rahmens angeordnet ist und mit welchem das Fahrzeug geschoben werden kann, wenn es nicht an einem Fahrrad angehängt ist. Ein besonderer Vorteil dieser Ausführungsform ist, dass der Schiebegriff gleichzeitig als Angriffspunkt für eine Verstellung der Seitenrahmenkonfiguration genutzt werden kann, wodurch sich eine intuitive und kraftsparende Bedienung des Rahmens während der Verstellung der Seitenrahmenkonfiguration ergeben kann.

Die Gelenkverbindung und/oder Schiebeverbindung kann insbesondere so mit dem linken Seitenrahmen und/oder mit dem rechten Seitenrahmen verbunden sein, dass eine gewünschte Seitenrahmenkonfiguration durch Betätigung des Schiebegriffes einstellbar ist. In diesem Fall ist eine Zwangskopplung des Schiebegriffs mit mindestens einem Seitenrahmenelement derart erforderlich, dass die Position des Schiebegriffs eine Soll-Seitenrahmenkonfiguration vorgibt.

In einer weiteren - besonders sicheren - Ausführungsform sind die Seitenrahmenelemente funktional mit mindestens einem Sicherungselement verbunden, das eine Veränderung der Seitenrahmenkonfiguration fixiert. Ein solches Sicherungselement muss für die Veränderung der Form der Seitenrahmenelemente betätigt werden. Als ein solches Sicherungselement kann beispielsweise ein Sperrriegel dienen, der durch Betätigung (insbesondere Drücken, Ziehen und/oder Drehen) eine Verriegelung löst und eine Relativbeweglichkeit von zwei über eine Schiebebindung und/oder Gelenkverbindung verbundenen Seitenrahmenelementen ermöglicht. Vorzugsweise wirkt an jedem Seitenrahmen mindestens ein Sicherungselement, wobei die Betätigung über ein gemeinsames Betätigungselement erfolgen kann. Das Betätigungselement kann aus Sicherheitsgründen auch so gestaltet und/oder angeordnet sein, dass das Sicherungselement nur durch Verwendung von zwei Händen gelöst werden kann. Beispielsweise kann dazu jeweils ein Betätigungselement an dem rechten Seitenrahmen und an dem linken Seitenrahmen angeordnet sein und ein Lösen des Sicherungselements nur dann ermöglicht sein, wenn beide Betätigungselemente gleichzeitig betätigt werden.

In einer weiteren praktischen Ausführungsform ist der Rahmen in einen flachen Transportzustand zusammenklappbar. Vorzugsweise weist der Rahmen in dem zusammengeklappten Zustand eine Höhe auf, die um mindestens 50% gegenüber der Höhe bei einer bestimmungsgemäßen Verwendung reduziert ist. Bevorzugt beträgt die Höhe des Rahmens in dem zusammengeklappten Transportzustand maximal als 50 cm, bevorzugt maximal 40 cm und besonders bevorzugt maximal 35 cm.

Die Rückenlehne ist vorzugsweise so angeordnet, dass sie in dem zusammengeklappten Zustand in Fahrzeuglängsrichtung betrachtet nicht nach vorne gegenüber den Seitenrahmenelementen hervorragt. Damit ergibt sich ein besonders kompakter Transportzustand.

Weitere praktische Ausführungsformen und Vorteile der Erfindung sind nachfolgend im Zusammenhang mit den Zeichnungen beschrieben. Es zeigen:
- Fig. 1: eine erste Ausführungsform eines Rahmens in einer ersten Seitenrahmenkonfiguration in einer Seitenansicht,
- Fig. 2: der Rahmen aus Fig. 1 in einer zweiten Seitenrahmenkonfiguration in einer Seitenansicht,
- Fig. 3: eine zweite Ausführungsform eines Rahmens in einer ersten Seitenrahmenkonfiguration in einer Seitenansicht,
- Fig. 4: den Rahmen aus Fig. 3 in einer zweiten Seitenrahmenkonfiguration in einer Seitenansicht,
- Fig. 5: den Rahmen aus Fig. 3 in der ersten Seitenrahmenkonfiguration in einer perspektivischen Ansicht,
- Fig. 6: eine dritte Ausführungsform eines Rahmens in einer ersten Seitenrahmenkonfiguration in einer Seitenansicht,
- Fig. 7: die dritte Ausführungsform aus Fig. 6 in einer zweiten Seitenrahmenkonfiguration in einer Seitenansicht,
- Fig. 8: die dritte Ausführungsform aus Fig. 6 in der ersten Seitenrahmenkonfiguration in einer perspektivischen Ansicht von schräg hinten,
- Fig. 9: den mit IX gekennzeichneten Bereich des in Fig. 8 gezeigten Rahmens in einer vergrößerten perspektivischen Ansicht von schräg vorne,
- Fig. 10: den in Fig. 9 gezeigten Bereich in einer perspektivischen Ansicht von schräg hinten,
- Fig. 11: die dritte Ausführungsform des Rahmens aus Fig. 6 in einem zusammengeklappten Transportzustand in einer perspektivischen Ansicht von schräg vorne, und
- Fig. 12: den Rahmen aus Fig. 11 in einer Seitenansicht.

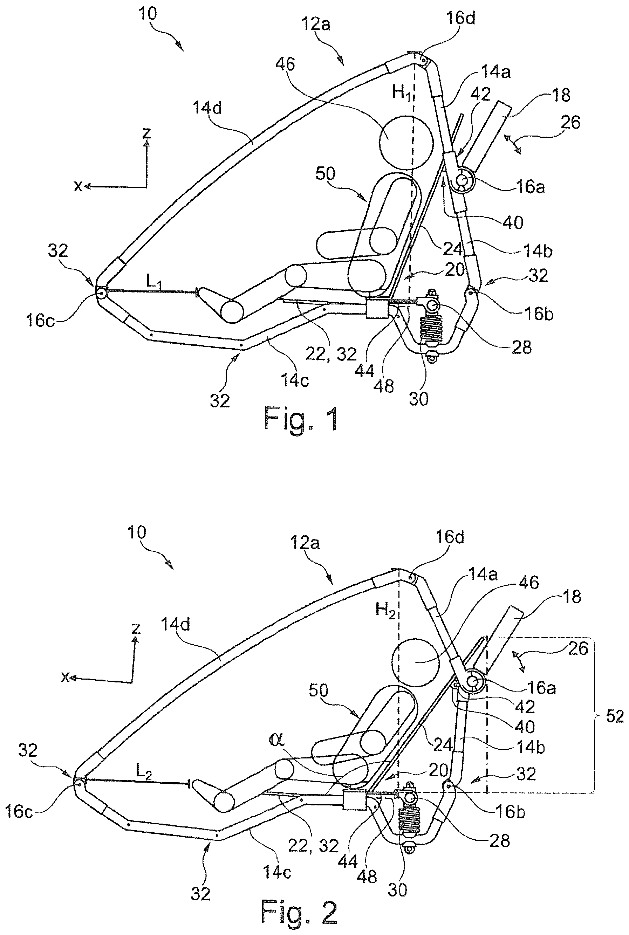

In den Fig. 1 und Fig. 2 ist eine erste Ausführungsform eines Rahmens 10 für einen Fahrradanhänger dargestellt, wobei die Figuren 1 und 2 zwei unterschiedliche Seitenrahmenkonfigurationen in Seitenansichten zeigen.

In den Seitenansichten ist nur ein linker Seitenrahmen 12a zu erkennen. Ein identisch ausgebildeter, rechter Seitenrahmen 12b (in den Figuren 1 und 2 nicht erkennbar), ist durch den Seitenrahmen 12a verdeckt.

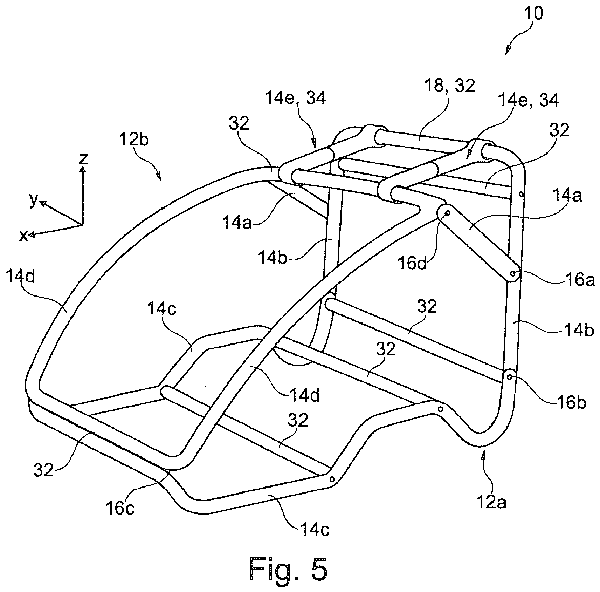

Wie in den Figuren erkennbar ist, erstrecken sich die Seitenrahmen 12a, 12b im Wesentlichen in Fahrzeughochrichtung (z-Richtung) und in Fahrzeuglängsrichtung (x-Richtung). Ebenfalls überwiegend verdeckt sind Verbindungselemente 32 in Form von Profilen, die sich zur Verbindung der Seitenrahmen 12a, 12b quer zur Erstreckungsrichtung der Seitenrahmen 12a, 12b erstrecken (vgl. Figur 5). Die Seitenrahmen 12a, 12b sind jeweils aus vier Seitenrahmenelementen 14a, 14b, 14c, 14d gebildet, die über Gelenkverbindungen 16a, 16b, 16c, 16d miteinander verbunden sind. Dabei ist jeweils eine vordere Gelenkverbindung 16c in der vorderen Hälfte der Seitenrahmen 12a, 12b angeordnet, während die übrigen Gelenkverbindungen 16a, 16b, 16d in der hinteren Hälfte der Seitenrahmen 12a, 12b angeordnet sind. Die Gelenkverbindungen 16b sind jeweils in der unteren Hälfte der Seitenrahmen 12a, 12b angeordnet, die Gelenkverbindungen 16d in der oberen Hälfte der Seitenrahmen 12a, 12b. Bei den Gelenkverbindungen 16a, 16b, 16c, 16d handelt es sich jeweils um Drehgelenke, wobei zwei über eine Gelenkverbindung 16a, 16b, 16c, 16d verbundene Seitenrahmenelemente 14a, 14b, 14c, 14d nur um eine in Fahrzeugquerrichtung (y-Richtung) ausgerichtete Drehachse der jeweiligen Gelenkverbindung 16a, 16b, 16c, 16d gegeneinander verdreht werden können.

Im Bereich der Gelenkverbindung 16a ist auch eine Verbindung zu einem Schiebegriff 18 ausgebildet. Der Schiebegriff 18 ist vorliegend unabhängig von den Seitenrahmenkonfigurationen der Seitenrahmen 12a, 12b einstellbar. Er kann in Richtung des Doppelpfeils 26 verschwenkt werden, um ihn in einer für eine Bedienperson ergonomische Höhe bringen zu können.

Sowohl für die Verstellung des Schiebegriffs 18 als auch für die Verstellung der Seitenrahmenkonfigurationen sind Rastelemente vorgesehen (nicht gezeigt), mittels welchen Soll-Positionen vorgegeben werden und mittels welchen der Schiebegriff 18 bzw. die Seitenrahmen 12a, 12b in den Soll-Positionen fixierbar sind.

Wie in den Figuren 1 und 2 zu erkennen ist, befindet sich zwischen den Seitenrahmen 12a, 12b innerhalb des Rahmens 10 ein Sitz 20 mit einer Sitzfläche 22 und einer Rückenlehne 24. Die Rückenlehne 24 ist in der gezeigten Ausführungsform mittels eines klauenartig ausgebildeten Abstützelements 40 an mit den Seitenrahmen 12a, 12b fest verbundenen Halteelementen 42 befestigt.

Die Sitzbank 22 ist in der gezeigten Ausführungsform fest mit den Seitenrahmen 12a, 12b verbunden und ist somit ein Verbindungselement 32 im Sinne der Erfindung. Auf dem Sitz 20 ist schematisch eine sitzende Person 50 dargestellt.

Die Seitenrahmen 12a, 12b sind in der gezeigten Ausführungsform über eine Blattfeder 44 und eine Schraubenfeder 30 federnd mit einer Anbindungsstelle 28 für Räder (nicht dargestellt) verbunden. Es handelt sich somit um einen Rahmen 10, der gegenüber Rädern (nicht dargestellt) mit direktem Bodenkontakt gefedert gelagert ist.

In Fig. 1 ist eine erste Seitenrahmenkonfiguration dargestellt, bei der eine aufrechte Position der Rückenlehne 24 eingestellt ist. Die Seitenrahmenelemente 14a und 14b sind dabei so eingestellt, dass sich im Bereich der Gelenkverbindung 16a in einem Winkel von ca. 180° zueinander angeordnet sind. In dieser ersten Seitenrahmenkonfiguration weist der Rahmen 10 gemessen von der Sitzflächenebene 48 des Sitzes 22 bis zum jeweils höchsten Punkt des Seitenrahmens 12a, 12b eine sich in Fahrzeughochrichtung (z-Richtung) erstreckende Höhe H₁ auf.

Fig. 2 zeigt eine zweite Seitenrahmenkonfiguration der ersten Ausführungsform des Rahmens 10 aus Figur 1, bei der die Seitenrahmenprofile 14a und 14b im Bereich der Gelenkverbindung 16a einen Winkel von weniger als 180°, hier ca. 150°, einschließen. Die Rückenlehne 24 ist in Fig. 2 in einer Ruheposition gezeigt. Dabei schließt die Rückenlehne 24 mit der - hier rein horizontal ausgerichteten - Sitzfläche 22 einen Winkel α von ca. 125° ein. Die Rückenlehne 24 ist dabei in einer gegenüber der in Fig. 1 gezeigten Sitzposition mit der ersten Seitenrahmenkonfiguration flacheren Ruheposition. Diese zweite Seitenrahmenkonfiguration mit der flacheren Ruheposition der Rückenlehne 24 ist als Schlafposition für die Person 50 besser geeignet. Ein Nutz-Teilbereich 52 (mit 52 ist im Folgenden nur die sich in Fahrzeughochrichtung erstreckende Höhe des Nutz-Teilbereichs gekennzeichnet, die Länge des Nutz-Teilbereichs erstreckt sich entlang der Rückenlehne ausgehend von dem jeweiligen linken Ende der gestrichelten Linie auf der Rückenlehne 24) der Rückenlehne 24 ist dabei in der Ruheposition vor dem rückseitigen Ende der Seitenrahmen 12a, 12b angeordnet. Die absolute Länge des Nutz-Teilbereichs 52 der Rückenlehne 24, d.h. das sich ausgehend von der Sitzfläche 22 in Fahrzeughochrichtung nach oben und gleichzeitig in Fahrzeuglängsrichtung nach hinten erstreckende Maß, beträgt vorliegend 100 % der gesamten Länge der Rückenlehne 24. Denn die Oberkante der Rückenlehne (vgl. Endpunkt der oberen gestrichelten Linie) liegt vor dem mit der strichpunktierten Linie gekennzeichneten rückseitigen Ende des Gelenks 16a, welches Teil des Seitenrahmens 12a ist und das rückseitige Ende des Seitenrahmens 12a darstellt. Die absolute Länge des Nutz-Teilbereichs 52 der Rückenlehne beträgt in dem gezeigten Beispiel in Fig. 2 70 cm. Wie in Fig. 5 erkennbar ist, sind die Seitenrahmen 12a, 12b in der gezeigten Ausführungsform parallel zueinander angeordnet. Das rückseitige Ende des Seitenrahmens 12b ist damit - in Fahrzeuglängsrichtung betrachtet - an der gleichen Position angeordnet wie das rückseitige Ende des Seitenrahmens 12a.

In der in Figur 2 gezeigten zweiten Seitenrahmenkonfiguration weist der Rahmen 10 (d.h. insbesondere die Seitenrahmen 12a, 12b dieses Rahmens 10) - gemessen von der Höhe der Sitzfläche 22 aus bis zum höchsten Punkt der jeweiligen Seitenrahmens 12a, 12b - eine Höhe H₂ auf, die kleiner als die Höhe H₁ ist. Dafür befindet sich aber der Kopf 46 der Person 50 noch erkennbar - in Fahrzeuglängsrichtung betrachtet - vor den Seitenrahmenelementen 14a, da diese gegenüber der ersten Seitenrahmenkonfiguration (vgl. Figur 1) in Fahrzeuglängsrichtung nach hinten verschoben sind.

Wie aus einer Zusammenschau der Figuren 1 und 2 ersichtlich ist, verändern sich durch die Veränderung des Winkels zwischen den Seitenrahmenprofilen 14a und 14b über das Gelenk 16a auch die Winkel zwischen den übrigen Seitenrahmenelementen 14a/14d im Bereich der Gelenkverbindungen 16d, 14c/14d im Bereich der Gelenkverbindungen 16c und 14b/14c im Bereich der Gelenkverbindungen 16b. Durch die Verstellbarkeit der Seitenrahmenkonfigurationen kann trotz einer hohen Variabilität der Sitzposition und einer kompakten Bauform des Fahrzeugs gewährleistet werden, dass eine in dem Fahrzeug sitzende Person 50, und insbesondere deren Kopf 46, unabhängig von der gewählten Sitzeinstellung vollständig innerhalb der Seitenrahmen 12a, 12b angeordnet bleibt. Die Person 50 ist dadurch vor äußeren Krafteinwirkungen sehr gut geschützt.

Die für die Beine verfügbare Länge L₂ in der flachen Sitzposition ist ferner gegenüber der verfügbaren Länge L₁ in der aufrechten Sitzposition unverändert und insbesondere nicht verkleinert.

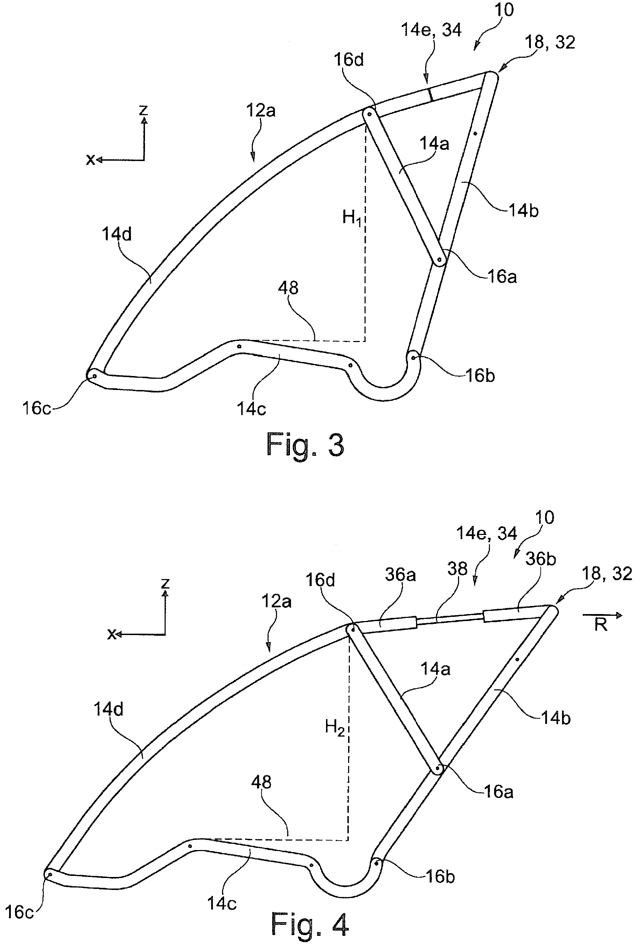

In den Figuren 3 bis 5 ist eine zweite Ausführungsform eines Rahmens 10 dargestellt. Im Folgenden werden für die Beschreibung der zweiten Ausführungsform für identische oder zumindest funktionsgleiche Elemente die gleichen Bezugszeichen verwendet wie in den Figuren 1 und 2.

Der Rahmen 10 umfasst einen linken Seitenrahmen 12a und einen rechten Seitenrahmen 12b (vgl. Figur 5), wobei in den Figuren 3 und 4 wiederum ansichtsbedingt nur der linke Seitenrahmen 12a zu sehen ist. Die Seitenrahmen 12a, 12b umfassen fünf Seitenrahmenelemente 14a, 14b, 14c, 14d, 14e die über Gelenkverbindungen 16a, 16b, 16c, 16d miteinander verbunden sind.

Die Seitenrahmenelemente 14a sind mit ihrem unteren Ende über die Gelenkverbindungen 16a mit einem mittleren Bereich der hinteren Seitenrahmenelementen 14b verbunden. Mit ihrem oberen Ende sind die Seitenrahmenelemente 14a über die Gelenkverbindungen 16d mit den oberen Enden der Seitenrahmenelemente 14d verbunden.

Die Seitenrahmenelemente 14b ragen über die Gelenkverbindungen 16a in Fahrzeughochrichtung hinaus bis zu einem oberen Verbindungselement 32, das auch als Schiebegriff 18 dienen kann. Dieses Verbindungselement 32 ist über zwei sich im Wesentlichen in Fahrzeuglängsrichtung und geringfügig in Fahrzeughochrichtung erstreckende Schiebeelemente 34 mit einem sich im Bereich der Gelenkverbindungen 16d anschließenden Verbindungselement 32 verbunden. Die Schiebeelemente 34 können aufgrund ihrer Orientierung und Anordnung auch als Seitenrahmenelemente 14e angesehen werden, da sie über die beiden oberen Verbindungselemente 32 eine zusätzliche Verbindung zwischen den Seitenrahmenelementen 14b und 14d herstellen.

Neben den bereits beschriebenen Verbindungselementen sind der linke Seitenrahmen 12a und der rechte Seitenrahmen 12b über mehrere weitere, sich in Fahrzeugquerrichtung erstreckende Verbindungselemente 32 in Form von Profilen (hier runde Profilstangen) verbunden, wobei vier der Verbindungselemente 32 in unteren Bereich des Rahmens 10 angeordnet bzw. ausgebildet sind.

Wie in Figur 4 gut zu erkennen ist, umfasst jedes Schiebeelement 34 ein vorderes Teilelement 36a und ein hinteres Teilelement 36b. Beide Teilelemente 36a, 36b sind über ein Mittelstück 38 miteinander verbunden und teleskopartig an dieses angebunden.

Wie aus den Figuren 3 und 4 ersichtlich ist, kann der Rahmen 10 zumindest in die beiden gezeigten Seitenrahmenkonfigurationen gebracht werden.

In Fig. 3 ist eine erste, für eine aufrechte Sitzposition geeignete Seitenrahmenkonfiguration dargestellt, aus welcher eine Höhe H₁ resultiert, wobei die Höhe H₁ wiederum gegenüber einer nur gestrichelt dargestellten Sitzflächenebene 48 eingetragen wurde. Das Schiebeelement 34 befindet in dieser Seitenrahmenkonfiguration in einer zusammengeschobenen Lage mit kurzer wirksamer Länge.

In Fig. 4 ist eine zweite Seitenrahmenkonfiguration der zweiten Ausführungsform des Rahmens dargestellt, die für eine flache Sitzposition geeignet ist. In dieser Seitenrahmenkonfiguration weist der Seitenrahmen gegenüber einer nur mit der gestrichelten Linie dargestellten Sitzflächenebene 48 eine kleinere Höhe H₂ auf, und die Teilelemente 36a, 36b sind teleskopartig gegenüber dem Mittelteil 38 ausgefahren, so dass sich eine große wirksame Länge des Seitenrahmenelements 14e ergibt.

Um die in Figur 4 dargestellte, flache Sitzposition zu erreichen, wird das Seitenrahmenelement 14b in Richtung der Pfeils nach hinten gezogen. Dadurch wird das Schiebelement 34 auseinandergezogen, die Winkel zwischen den Seitenrahmenelementen 14a und 14b werden vergrößert, und die Höhe wird von H₁ auf H₂ stark verringert.

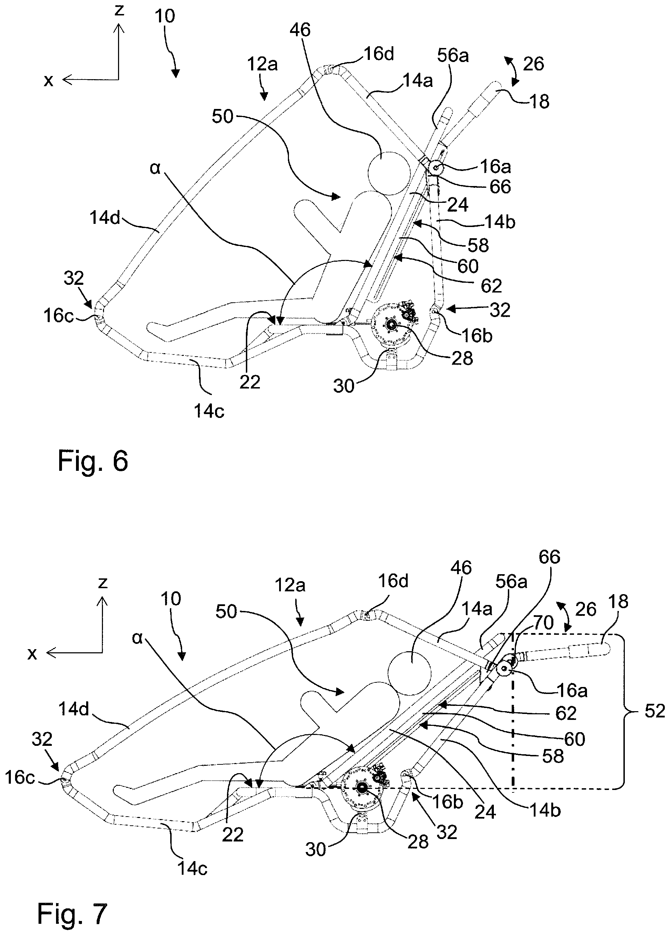

In den Fig. 6 bis 12 ist eine dritte Ausführungsform eines Rahmens 10 dargestellt, der - soweit im Folgenden nicht abweichend beschrieben - analog zu dem in den Fig. 1 bis 5 gezeigten Rahmen 10 aufgebaut ist.

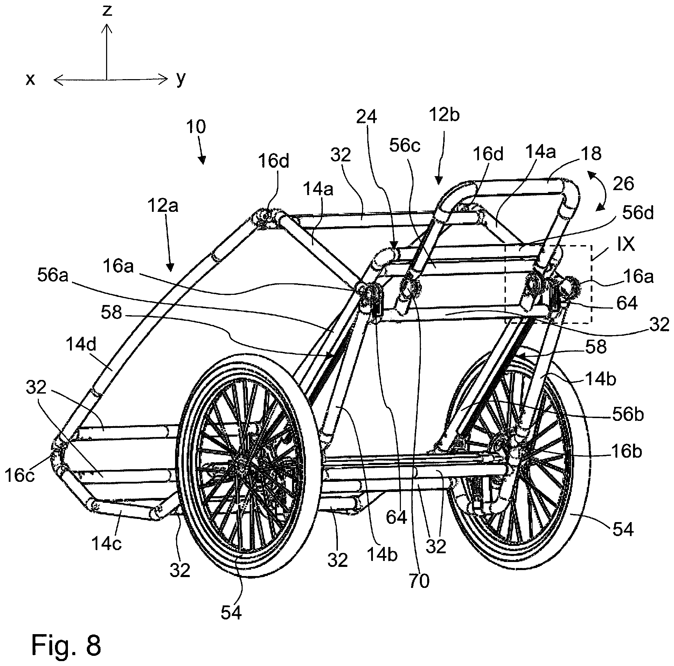

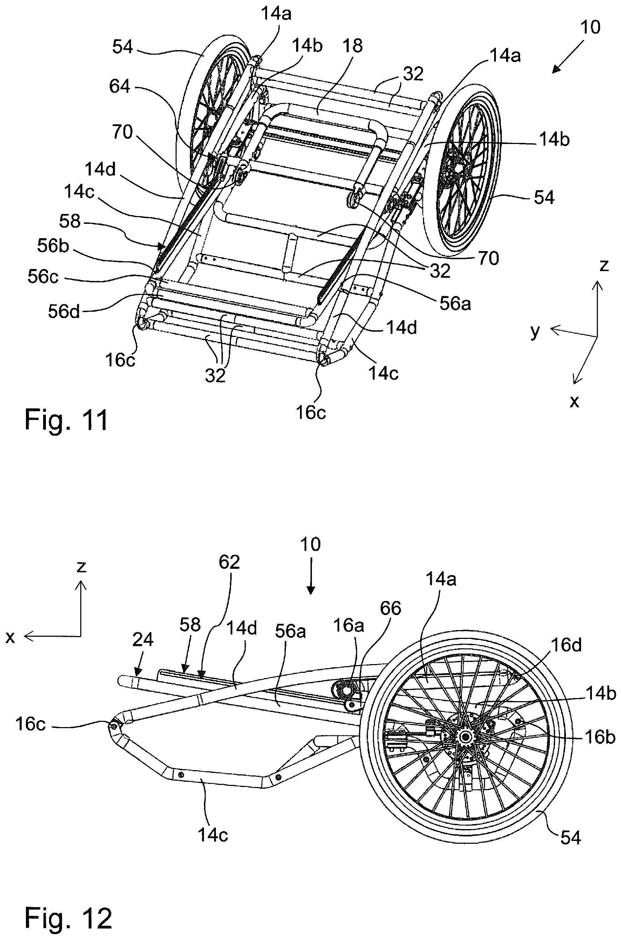

Fig. 6 und 8 zeigen den Rahmen 10 in einer ersten Seitenrahmenkonfiguration (in einem Nutzzustand) in einer Sitzposition, und Fig. 7 zeigt den Rahmen 10 in einer zweiten Seitenrahmenkonfiguration (in einer Ruheposition). Die Fig. 11 und 12 zeigen den Rahmen 10 in einem zusammengeklappten Transportzustand. In den Figuren 8, 11 und 12 ist der Rahmen 10 mit daran angeordneten Rädern 54 dargestellt.

Die in den Figuren 6 bis 12 gezeigte dritte Ausführungsform umfasst ebenfalls einen linken Seitenrahmen 12a und einen rechten Seitenrahmen 12b, wobei der linke Seitenrahmen 12a und der rechte Seitenrahmen 12b jeweils Seitenrahmenelemente 14a, 14b, 14c und 14d umfassen. Der linke Seitenrahmen 12a und der rechte Seitenrahmen 12b sind über eine Vielzahl von Verbindungselementen 32 in Form von Gelenkverbindungen 16a, 16b, 16c, 16d miteinander verbunden. Bei den Gelenkverbindungen 16a, 16b, 16c, 16d handelt es sich in der gezeigten Ausführungsform um Drehgelenke.

In Fig. 6 ist die Rückenlehne 24 ist einer aufrechten Sitzposition gezeigt. Der Winkel α zwischen der Sitzfläche 22 und der Rückenlehne 24 beträgt hier 115°. Die beiden Seitenrahmenelemente 14a und 14b weisen im Bereich der hinteren Gelenkverbindung 16a in der Sitzposition einen stumpfen Winkel auf (hier ca. 140°). Die Seitenrahmenelemente 14a und 14d weisen in der Sitzposition im Bereich der oberen Gelenkverbindung 16d einen Winkel von ca. 90° auf.

In Fig. 7 ist der Rahmen 10 in einer zweiten Seitenrahmenkonfiguration dargestellt. Die Rückenlehne 24 ist in einer - gegenüber der in Fig. 6 gezeigten Sitzposition - flacheren Ruheposition. Die Rückenlehne 24 schließt in Fig. 7 mit der Sitzfläche 22 in der Ruheposition einen Winkel α von 140° ein. Der untere Nutz-Teilbereich 52 der Rückenlehne 24 ist dabei vor dem hinteren Ende der Seitenrahmen 12a, 12b angeordnet. Der Nutz-Teilbereich 52 erstreckt sich vorliegend über 100% der Länge der Rückenlehne 24. Die absolute Länge des Nutz-Teilbereichs 52 beträgt vorliegend auch ca. 70 cm. Denn die Oberkante der Rückenlehne 24 (vgl. Endpunkt der oberen gestrichelten Linie) liegt vor dem mit der strichpunktierten Linie gekennzeichneten rückseitigen Ende des Gelenks 16a, welches Teil des Seitenrahmen 12a ist und das rückseitige Ende des Seitenrahmens 12a darstellt.

Die beiden Seitenrahmenelemente 14a und 14b weisen im Bereich der hinteren Gelenkverbindung 16a in der Ruheposition einen spitzen Winkel auf (hier ca. 75°). Die Seitenrahmenelemente 14a, 14d weisen in der Ruheposition im Bereich der oberen Gelenkverbindung 16d einen stumpfen Winkel auf (hier ca. 130°). Die Seitenrahmen 12a, 12b und der Rahmen 10 sind damit in der zweiten Seitenrahmenkonfiguration flach und langgestreckt im Vergleich zur ersten Seitenrahmenkonfiguration.

Wie in Fig. 8 gut zu erkennen ist, umfasst die Rückenlehne 24 in der dritten Ausführungsform vier rechtwinklig angeordnete Rückenlehnenelemente 56a, 56b, 56c, 56d, wobei sich zwei Rückenlehnenelemente 56a, 56b parallel von den unteren Seitenrahmenelementen 14c aus überwiegend in Fahrzeughochrichtung (z-Richtung) und auch in Fahrzeuglängsrichtung (x-Richtung) nach hinten erstrecken. Die Rückenlehnenelemente 56a, 56b sind mittels des dritten und vierten, sich zueinander parallel jeweils in Fahrzeugquerrichtung (y-Richtung) erstreckenden Rückenlehnenelementen 56c, 56d miteinander verbunden. An den sich in Fahrzeughochrichtung (z-Richtung) erstreckenden Rückenlehnenelementen 56a, 56b ist jeweils ein erstes Führungselement 58 in Form von jeweils einer Gleitschiene 60 angeordnet (vgl. auch Fig. 6 und 7).

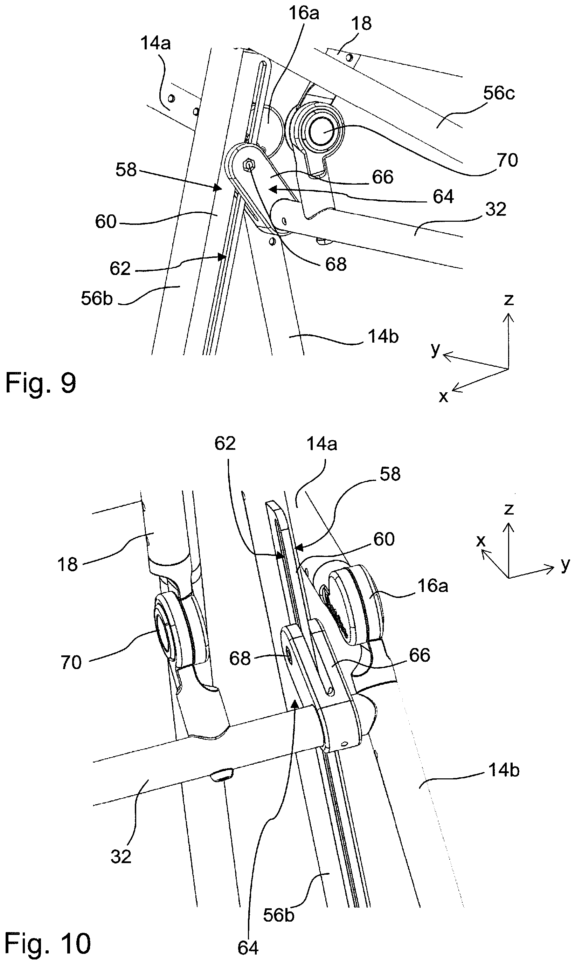

Ein Ausschnitt der rechten Gleitschiene 60 ist im Detail in den Fig. 9 und 10 gezeigt. Die Gleitschiene 60 weist einen Schlitz 62 auf, welcher sich in der gezeigten Stellung parallel zu dem Rücklehenelement 56b in Fahrzeughochrichtung nach oben und in Fahrzeuglängsrichtung nach hinten erstreckt.

Ausgehend von den in Fahrzeuglängsrichtung (x-Richtung) dahinter angeordneten Seitenrahmenelementen 14b ist ein Verbindungselement 32 angeordnet, das sich in Fahrzeugquerrichtung (y-Richtung) erstreckt und die beiden Seitenrahmenelemente 14b miteinander verbindet. An dem Verbindungselement 32 ist jeweils ein zweites Führungselement 64 korrespondierend zu dem ersten Führungselement 60 angeordnet. In der gezeigten Ausführungsform ist das zweite Führungselement 64 als ein u-förmiges Gleitelement 66 ausgebildet, welches die Gleitschiene 60 von beiden Seiten umgreift und einen Bolzen 68 umfasst, der den Schlitz 62 durchragt, so dass das erste Führungselement 58 und das zweite Führungselement 64 nach Art einer Gleitführung formschlüssig miteinander gekoppelt sind. Vorliegend erstreckt sich der Schlitz 62 parallel zu den gerade ausgeführten Rückenlehnenelementen 56a, 56b, so dass sich eine Linearführung ergibt. Das Gleitelement 66 ist dreh- und verschiebefest mit dem sich zwischen den beiden Seitenrahmenelementen 14b erstreckenden Verbindungselement 32 verbunden.

Bei einer Veränderung der Neigung der Rückenlehne 24, z.B. von einer Sitzposition (vgl. Fig. 6) in eine Ruheposition (vgl. Fig. 7), wird über die Gleitführung durch das erste Führungselement 58 und das zweite Führungselement 64 gleichzeitig eine Veränderung der Seitenrahmenkonfiguration des linken Seitenrahmens 12a und des rechten Seitenrahmens 12b bewirkt.

Der Schiebegriff 18 ist in dieser Ausführungsform separat an dem Verbindungselement 32 montiert und kann unabhängig von der Seitenrahmenkonfiguration entlang des Doppelpfeils 26 nach oben und unten verschwenkt werden. Dazu ist an dem Schiebegriff 18 eine weitere Gelenkverbindung 70 in Form eines Drehgelenks angeordnet.

Die Figuren 11 und 12 zeigen die dritte Ausführungsform des Rahmens 10 in einem zusammengeklappten, flachen Transportzustand. Wie insbesondere aus Fig. 10 gut ersichtlich ist, erstreckt sich die Höhe des Rahmens 10 im Transportzustand über deutlich weniger als 50 % der Höhe des Rahmens 10 im Nutzzustand (vgl. Fig. 6 und 7).

Wie gut zu erkennen ist, ist die Rückenlehne 24 in Fahrzeuglängsrichtung (x-Richtung) nach vorne geklappt und die Gelenke 16a sind mit den Seitenrahmenelementen 14a und 14b jeweils zwischen den unteren Seitenrahmenelementen 14c und den oberen Seitenrahmenelementen 14d eingeklappt. Die Rückenlehne 24 ist derart ausgelegt, dass keines der Rückenlehnenelemente 56a, 56b, 56c, 56d der Rückenlehne 24 im zusammenklappten Transportzustand in Fahrzeuglängsrichtung (x-Richtung) nach vorne über den linken Seitenrahmen 12a bzw. den rechten Seitenrahmen 12b, vorliegend insbesondere über das vordere Gelenk 16c hervorragt.

Es wird darauf hingewiesen, dass die Rahmen 10 nicht nur mit einem Sitz 20 kombiniert sein können, sondern auch Transportflächen für einen reinen Warentransport umfassen können.

### Bezugszeichenliste

- 10: Rahmen
- 12a: linker Seitenrahmen
- 12b: rechter Seitenrahmen
- 14a, 14b, 14c, 14d, 14e: Seitenrahmenelement
- 16a, 16b, 16c, 16d: Gelenkverbindung
- 18: Schiebegriff
- 20: Sitz
- 22: Sitzfläche
- 24: Rückenlehne
- 26: Doppelpfeil
- 28: Anbindungsstelle
- 30: Feder
- 32: Verbindungselement
- 34: Schiebeelement
- 36a: vorderes Teilelement
- 36b: hinteres Teilelement
- 38: Mittelstück
- 40: Abstützelement
- 42: Halteelement
- 44: Blattfeder
- 46: Kopf
- 48: Sitzflächenebene
- 50: Person
- 52: Nutz-Teilbereich der Rückenlehne
- 54: Rad
- 56a, 56b, 56c, 56d: Rückenlehnenelement
- 58: erstes Führungselement
- 60: Gleitschiene
- 62: Schlitz
- 64: zweites Führungselement
- 66: Gleitkörper
- 68: Bolzen
- 70: Gelenkverbindung (Schiebegriff)

## Patentansprüche

1. Fahrradanhänger oder Kinderwagen mit einem Rahmen (10) mit
a) mindestens einem sich in Fahrzeuglängsrichtung und sich in Fahrzeughochrichtung erstreckenden linken Seitenrahmenelement (14a, 14b, 14c, 14d) zur Bildung eines linken geschlossenen Seitenrahmens (12a),
b) mindestens einem sich in Fahrzeuglängsrichtung und in Fahrzeughochrichtung erstreckenden rechten Seitenrahmenelement (14a, 14b, 14c, 14d, 14e) zur Bildung eines rechten geschlossenen Seitenrahmens (12b) und
c) mindestens einem sich in Fahrzeugquerrichtung zwischen dem linken Seitenrahmen (12a) und dem rechten Seitenrahmen (12b) erstreckenden Verbindungselement (32),
d) wobei der linke Seitenrahmen (12a) und der rechte Seitenrahmen (12b) jeweils derart veränderlich ausgebildet sind, dass diese in mindestens zwei für die bestimmungsgemäße Verwendung des Fahrradanhängers oder Kinderwagens geeignete, unterschiedliche Seitenrahmenkonfigurationen verstellbar und in diesen Seitenrahmenkonfigurationen fixierbar sind,
e) wobei eine Rückenlehne (24) eines Sitzes (20) zusätzlich zu mindestens einer Sitzposition in eine Ruheposition mit einer im Vergleich zur Sitzposition geringeren Neigung der Rückenlehne (24) bringbar ist, in welcher die Rückenlehne (24) in Fahrzeuglängsrichtung betrachtet zumindest mit einem Nutz-Teilbereich (52), der sich über einen überwiegenden Teil der Länge der Rückenlehne (24) erstreckt, vor dem rückseitigen Ende mindestens eines Seitenrahmens (12a, 12b) angeordnet ist,
**dadurch gekennzeichnet,**
f) **dass** die Rückenlehne (24) und die Seitenrahmen (12a, 12b) über Kopplungsmittel derart funktional miteinander verbunden sind, dass eine Veränderung der Neigung der Rückenlehne (24) gleichzeitig eine Veränderung der Seitenrahmenkonfiguration bewirkt.

2. Fahrradanhänger oder Kinderwagen nach dem vorstehenden Anspruch, **dadurch gekennzeichnet, dass** die Rückenlehne (24) des Sitzes (20) an einem Seitenrahmenelement (14a, 14b) und/oder einem sich zwischen zwei Seitenrahmenelementen (14) erstreckenden Verbindungselement (32) unmittelbar oder mittelbar abstützend angeordnet ist.

3. Fahrradanhänger oder Kinderwagen nach einem der vorstehenden Ansprüche, **dadurch gekennzeichnet, dass** die Rückenlehne (24) des Sitzes (20) ein erstes Führungselement (58) aufweist und mindestens ein Seitenrahmenelement (14a, 14b) und/oder ein Verbindungselement (32) ein zu dem ersten Führungselement (58) korrespondierendes zweites Führungselement (64) aufweist, wobei das erste Führungselement (58) und das zweite Führungselement (64) nach Art einer Gleitschienenführung miteinander zwangsgekoppelt sind.

4. Fahrradanhänger oder Kinderwagen nach dem vorstehenden Anspruch, **dadurch gekennzeichnet, dass** das erste Führungselement (58) und das zweite Führungselement (64) eine Gleitschiene (60) mit einem Schlitz (62) und ein Gleitkörper (66) mit einem in den Schlitz (62) eingreifenden oder den Schlitz hintergreifenden Element (68) sind.

5. Fahrradanhänger oder Kinderwagen nach einem oder mehreren der vorstehenden Ansprüche, **dadurch gekennzeichnet, dass** jeder Seitenrahmen (12a, 12b) mindestens zwei Seitenrahmenelemente (14a, 14b, 14c, 14d, 14e) umfasst und wobei jeder Seitenrahmen (12a, 12b) mindestens eine Gelenkverbindung (16a, 16b) zwischen zwei Seitenrahmenelementen (14a, 14b, 14c, 14d, 14e) umfasst, über welche die Seitenrahmenelemente (14a, 14b, 14c, 14d, 14e) relativbeweglich zueinander angeordnet sind.

6. Fahrradanhänger oder Kinderwagen nach einem oder mehreren der vorstehenden Ansprüche, **dadurch gekennzeichnet, dass** jeder Seitenrahmen (12a, 12b) mindestens zwei Seitenrahmenelemente (14a, 14b, 14c, 14d, 14e) umfasst, welche über eine Schiebeverbindung relativ zueinander verschiebbar sind.

7. Fahrradanhänger oder Kinderwagen nach einem oder mehreren der vorstehenden Ansprüche, **dadurch gekennzeichnet, dass** jeder Seitenrahmen (12a, 12b) mindestens eine vordere Gelenkverbindung (16c) in der vorderen Hälfte des Seitenrahmens (12a, 12b) und mindestens eine hintere Gelenkverbindung (16b) in der hinteren Hälfte des Seitenrahmens (12a, 12b) umfasst.

8. Fahrradanhänger oder Kinderwagen nach einem der vorstehenden Ansprüche, **dadurch gekennzeichnet, dass** mindestens eine Gelenkverbindung (16a, 16b, 16c, 16d) als ein Drehgelenk ausgebildet ist.

9. Fahrradanhänger oder Kinderwagen nach einem oder mehreren der beiden vorstehenden Ansprüche, **dadurch gekennzeichnet, dass** mindestens eine Schiebeverbindung und/oder mindestens eine Gelenkverbindung (16a, 16b) ein Rastelement mit vorgegebenen Rastpositionen umfasst.

10. Fahrradanhänger oder Kinderwagen nach einem oder mehreren der drei vorstehenden Ansprüche, **dadurch gekennzeichnet, dass** mindestens eine Gelenkverbindung (16a, 16b) und/oder Schiebeverbindung gleichzeitig als Verbindung zwischen einem Seitenrahmen (12a, 12b) und einem Schiebegriff (18) ausgebildet ist.

11. Fahrradanhänger oder Kinderwagen nach dem vorstehenden Anspruch, **dadurch gekennzeichnet, dass** der Schiebegriff (18) über die Gelenkverbindung (16a) und/oder Schiebeverbindung derart mit dem linken Seitenrahmen (12a) und/oder mit dem rechten Seitenrahmen (12b) gekoppelt ist, dass eine gewünschte Seitenrahmenkonfiguration durch Betätigung des Schiebegriffs (18) einstellbar ist.

12. Fahrradanhänger oder Kinderwagen nach einem oder mehreren der vorstehenden Ansprüche, **dadurch gekennzeichnet, dass** die Seitenrahmenelemente (14a, 14b, 14c, 14d, 14e) funktional mit mindestens einem Sicherungselement verbunden sind, das eine Veränderung der Seitenrahmenkonfiguration fixiert.

13. Fahrradanhänger oder Kinderwagen nach einem der vorstehenden Ansprüche, **dadurch gekennzeichnet, dass** der Rahmen (10) in einen flachen Transportzustand zusammenklappbar ist.

## Claims

1. A bicycle trailer or buggy with a frame (10) comprising
a) at least one left side frame element (14a, 14b, 14c, 14d) extending in the longitudinal direction of the vehicle and in the vertical direction of the vehicle for forming a left closed side frame (12a),
b) at least one right side frame element (14a, 14b, 14c, 14d, 14e) extending in the longitudinal direction of the vehicle and in the vertical direction of the vehicle for forming a right closed side frame (12b), and
c) at least one connecting element (32) extending in the width direction of the vehicle between the left side frame (12a) and the right side frame (12b),
d) wherein the left side frame (12a) and the right side frame (12b) are each variably designed such that they are adjustable to at least two different side frame configurations suitable for the intended use of the bicycle trailer or buggy and can be fixed in these side frame configurations,
e) wherein a seat back (24) of a seat (20) can be moved in addition to at least one sitting position to a rest position with a lower inclination of the seat back (24) compared to the sitting position, wherein the back rest (24) when viewed in the longitudinal direction of the vehicle is arranged together with at least one utility portion (52) extending across most of the length of the seat back (24) in front of the rear end of at least one side frame (12a, 12b),
**characterised in that**
f) the seat back (24) and the side frames (12a, 12b) are functionally connected to one another by coupling means such that a change of the inclination of the seat back (24) simultaneously causes a change of the side frame configuration.

2. The bicycle trailer or buggy according to the preceding claim, **characterised in that** the seat back (24) of the seat (20) is indirectly or directly arranged at and supported by a side frame element (14a, 14b) and/or a connecting element (32) extending between side frame elements (14).

3. The bicycle trailer or buggy according to anyone of the preceding claims, **characterised in that** the seat back (24) of the seat (20) has a first guide element (58) and at least one side frame element (14a, 14b) and/or a connecting element (32) has a second guide element (64) corresponding to the first guide element (58) wherein the first guide element (58) and the second guide element (64) are positively coupled to one another in the manner of a slide rail guide.

4. The bicycle trailer or buggy according to the preceding claim, **characterised in that** the first guide element (58) and the second guide element (64) are a slide rail (60) with a slot (62) and a sliding body (66) with an element (68) which engages in the slot (62) or behind the slot.

5. The bicycle trailer or buggy according to one or several of the preceding claims, **characterised in that** each side frame (12a, 12b) comprises at least two side frame elements (14a, 14b, 14c, 14d, 14e) and wherein each side frame (12a, 12b) comprises at least one hinge connection (16a, 16b) between two side frame elements (14a, 14b, 14c, 14d, 14e) via which the side frame elements (14a, 14b, 14c, 14d, 14e) are relatively movable with respect to one another.

6. The bicycle trailer or buggy according to one or several of the preceding claims, **characterised in that** each side frame (12a, 12b) comprises at least two side frame elements (14a, 14b, 14c, 14d, 14e) which are slidable relative to one another by a sliding connection.

7. The bicycle trailer or buggy according to one or several of the preceding claims, **characterised in that** each side frame (12a, 12b) comprises at least one front hinge connection (16c) in the front half of the side frame (12a, 12b) and at least one rear hinge connection (16b) in the rear half of the side frame (12a, 12b).

8. The bicycle trailer or buggy according to anyone of the preceding claims, **characterised in that** at least one hinge connection (16a, 16b, 16c, 16d) is configured as a swivel joint.

9. The bicycle trailer or buggy according to one or several of the two preceding claims, **characterised in that** at least one sliding connection and/or at least one hinge connection (16a, 16b) comprise a latching element with predetermined latching positions.

10. The bicycle trailer or buggy according to one or several of the three preceding claims, **characterised in that** at least one hinge connection (16a, 16b) and/or sliding connection is simultaneously configured as a connection between a side frame (12a, 12b) and a push handle (18).

11. The bicycle trailer or buggy according to the preceding claim, **characterised in that** the push handle (18) is coupled to the left side frame (12a) and/or the right side frame (12b) via the hinge connection (16a) and/or the sliding connection such that a desired side frame configuration is adjustable by actuating the push handle (18).

12. The bicycle trailer or buggy according to one or several of the preceding claims, **characterised in that** the side frame elements (14a, 14b, 14c, 14d, 14e) are functionally connected to at least one securing element that fixes a change of the side frame configuration.

13. The bicycle trailer or buggy according to anyone of the preceding claims, **characterised in that** the frame (10) is foldable to a flat transportation state.

## Revendications

1. Remorque de bicyclette ou poussette avec un cadre (10) avec
a) au moins un élément de cadre latéral gauche (14a, 14b, 14c, 14d) s'étendant dans la direction longitudinale du véhicule et dans la direction verticale du véhicule pour former un cadre latéral fermé gauche (12a),
b) au moins un élément de cadre latéral droit (14a, 14b, 14c, 14d, 14e) s'étendant dans la direction longitudinale du véhicule et dans la direction verticale du véhicule, pour former un cadre latéral fermé droit (12b), et
c) au moins un élément de liaison (32) s'étendant dans la direction transversale du véhicule entre le cadre latéral gauche (12a) et le cadre latéral droit (12b),
d) le cadre latéral gauche (12a) et le cadre latéral droit (12b) étant chacun conçus pour être variables de telle sorte qu'ils puissent être ajustés dans au moins deux configurations de cadre latéral différentes appropriées pour l'utilisation prévue de la remorque de bicyclette ou de la poussette et puissent être fixés dans ces configurations de cadre latéral,
e) en plus d'au moins une position d'assise, un dossier (24) d'un siège (20) pouvant être amené dans une position de repos avec une inclinaison inférieure du dossier (24) par rapport à la position d'assise, dans laquelle le dossier (24) est agencé devant l'extrémité arrière d'au moins un cadre latéral (12a, 12b), vu dans la direction longitudinale du véhicule, au moins avec une zone partielle utile (52) qui s'étend sur une majeure partie de la longueur du dossier (24),
**caractérisée en ce que**
f) le dossier (24) et les cadres latéraux (12a, 12b) sont reliés fonctionnellement l'un à l'autre par l'intermédiaire de moyens d'accouplement de telle sorte qu'une modification de l'inclinaison du dossier (24) provoque simultanément une modification de la configuration du cadre latéral.

2. Remorque de bicyclette ou poussette selon la revendication précédente, **caractérisée en ce que** le dossier (24) du siège (20) est disposé de manière à être directement ou indirectement en appui sur un élément de cadre latéral (14a, 14b) et/ou un élément de liaison (32) s'étendant entre deux éléments de cadre latéraux (14).

3. Remorque de bicyclette ou poussette selon l'une quelconque des revendications précédentes, **caractérisée en ce que** le dossier (24) du siège (20) comprend un premier élément de guidage (58) et qu'au moins un élément de cadre latéral (14a, 14b) et/ou un élément de liaison (32) comprend un second élément de guidage (64) correspondant au premier élément de guidage (58), le premier élément de guidage (58) et le second élément de guidage (64) étant accouplés l'un à l'autre par complémentarité de forme à la manière d'un guide de glissière.

4. Remorque de bicyclette ou poussette selon la revendication précédente, **caractérisée en ce que** le premier élément de guidage (58) et le second élément de guidage (64) sont un rail de glissement (60) avec une fente (62) et un corps de glissement (66) avec un élément (68) s'engageant dans la fente (62) ou s'engageant derrière la fente.

5. Remorque de bicyclette ou poussette selon une ou plusieurs des revendications précédentes, **caractérisée en ce que** chaque cadre latéral (12a, 12b) comprend au moins deux éléments de cadre latéraux (14a, 14b, 14c, 14d, 14e), chaque cadre latéral (12a, 12b) comprenant au moins une liaison articulée (16a, 16b) entre deux éléments de cadre latéraux (14a, 14b, 14c, 14d, 14e), par l'intermédiaire de laquelle les éléments de cadre latéraux (14a, 14b, 14c, 14d, 14e) sont agencés de manière à être mobiles l'un par rapport à l'autre.

6. Remorque de bicyclette ou poussette selon une ou plusieurs des revendications précédentes, **caractérisée en ce que** chaque cadre latéral (12a, 12b) comprend au moins deux éléments de cadre latéraux (14a, 14b, 14c, 14d, 14e) qui peuvent être déplacés l'un par rapport à l'autre par l'intermédiaire d'une liaison coulissante.

7. Remorque de bicyclette ou poussette selon une ou plusieurs des revendications précédentes, **caractérisée en ce que** chaque cadre latéral (12a, 12b) comprend au moins une articulation avant (16c) dans la moitié avant du cadre latéral (12a, 12b) et au moins une articulation arrière (16b) dans la moitié arrière du cadre latéral (12a, 12b).

8. Remorque de bicyclette ou poussette selon l'une quelconque des revendications précédentes, **caractérisée en ce qu'**au moins une liaison articulée (16a, 16b, 16c, 16d) est réalisée sous la forme d'une articulation pivotante.

9. Remorque ou poussette selon une ou plusieurs des deux revendications précédentes, **caractérisée en ce qu'**au moins une liaison coulissante et/ou au moins une liaison articulée (16a, 16b) comprend un élément d'encliquetage avec des positions d'encliquetage prédéterminées.

10. Remorque de bicyclette ou poussette selon une ou plusieurs des trois revendications précédentes, **caractérisée en ce qu'**au moins une liaison articulée (16a, 16b) et/ou une liaison coulissante est réalisée en même temps comme liaison entre un cadre latéral (12a, 12b) et une poignée coulissante (18).

11. Remorque de bicyclette ou poussette selon la revendication précédente, **caractérisée en ce que** la poignée coulissante (18) est couplée au cadre latéral gauche (12a) et/ou au cadre latéral droit (12b) par l'intermédiaire de la liaison articulée (16a) et/ou de la liaison coulissante de telle sorte qu'une configuration de cadre latéral souhaitée puisse être réglée par actionnement de la poignée coulissante (18).

12. Remorque de bicyclette ou poussette selon une ou plusieurs des revendications précédentes, **caractérisée en ce que** les éléments de cadre latéraux (14a, 14b, 14c, 14d, 14e) sont reliés fonctionnellement à au moins un élément de fixation qui fixe une modification de la configuration du cadre latéral.

13. Remorque de bicyclette ou poussette selon l'une quelconque des revendications précédentes, **caractérisée en ce que** le cadre (10) peut être plié dans un état de transport plat.
